# EUROPEAN PATENT APPLICATION

(11) **EP 3 247 109 A1**
(43) Date of publication of application: **22.11.2017**
(21) Application number: 16170546.2
(22) Date of filing: 20.05.2016
(51) Int. Cl.: H04N 5/353, H04N 5/355

(54) **PARALLEL HIGH DYNAMIC RANGE IMAGING AND TONE MAPPING**

(71) Applicant: Universität Zürich, 8006 Zürich (CH)
(72) Inventor: Martel, Julien, 8037 Zürich (CH); Müller, Lorenz, 8051 Zürich (CH)
(74) Representative: Veni Swiss & European Patent Attorneys

(57) **Abstract**

The present invention concerns a method of obtaining a tone-mapped high dynamic range media item in an imaging apparatus comprising a vision sensor comprising an array of cells, each cell comprising a processing element and a media element configured to communicate with the processing element. The processing elements comprise a first register and a second register. The method comprises for each of the cells in the array of cells: defining (31) a first neighbourhood set comprising a first number of media elements and a second neighbourhood set comprising a second number of media elements different from the first number of media elements; setting (33) a first logical condition for the first neighbourhood set and a second logical condition for the second neighbourhood set; integrating a photocurrent value resulting from an exposure of the media element to light, and storing a resulting evolving integrated photocurrent value in the first register of the respective cell; determining a first conditioning value for the first neighbourhood set and a second conditioning value for the second neighbourhood set; as long as the first conditioning value fulfils the first logical condition and the second conditioning value fulfils the second logical condition, copying (41) the value from the first register into the second register at given time instants; and reading (43) the value from the second register.

## Description

### TECHNICAL FIELD

The present invention relates to a method of obtaining a tone-mapped, high dynamic range media item, such as an image or video. The invention also relates to the corresponding imaging apparatus and system.

### BACKGROUND OF THE INVENTION

Designs and implementations of sensor processing systems traditionally split the concepts of sensing and processing. For instance, in machine vision, a sensor capturing visual information from the outside world is commonly kept separate from a processor which operates on it. The idea of keeping sensors and processors separate has traditionally made the integration of additional sensors easy. This approach also allows focusing on the design of data processing algorithms abstracting from the notion of sensing. However, new challenges in vision applications are questioning this approach. A need for embedded vision sensors which can operate in real-world conditions is increasing. Applications for mobile robotic platforms, flying drones, or for restrained industrial setups impose strong constraints on the design of vision-systems. These real-world applications are characterised by the ability to operate under uncontrolled conditions using technologies embedded in a small form-factor device and working at low latencies on a limited power-budget. An issue with split sensing and processing is that a lot of complex information coming from the sensor(s) has to be transferred to the core of the device where processing takes place creating a bottleneck because of the limited bandwidth and available computing capacity. Therefore, low-latencies are usually achieved at the expense of the form-factor and power budget because of the addition of more processing capabilities.

The scaling down of lithographic processes for very large scale integration (VLSI) makes it possible to address the above issues. It allows the design and fabrication of complex sensors which can embed more intelligence, i.e. can perform information processing. Thus, a solution is to bring sensing and processing together by placing processing capabilities next to the sensor, which can - and this is the main purpose of it - potentially influence the sensing. This requires the design and fabrication of different hardware architectures and the design of algorithms exploiting the properties of those architectures. The present invention relates to those approaches entangling both the acquisition and the data processing. Approaches in this line of thought can give rise to simple and efficient solutions but, as mentioned earlier, usually requires to redesign architectures and procedures running on those sensors.

Another solution to address these constraints is to keep sensing apart from processing and design new sensors that produce less data (or in a different form). This is the standpoint of compressed sensing and its implementation on sensors whose idea is to spatially sample light intensities in a sparse manner, or that of the dynamic vision sensors (DVS) designed to solely record spatio-temporal changes in intensity or again of other application specific integrated circuit (ASIC) vision chips. Indeed, with these new sensors comes an additional - potentially complex - processing cost if one wants to recover images; otherwise, working on these new forms of visual information requires new processing techniques and algorithms.

In many imaging applications, such as applications for self-driving cars and autonomously navigating mobile platforms including robots and drones, it is beneficial to obtain high dynamic range (HDR) and tone-mapped images or videos. HDR imaging is a technique used in imaging and photography to capture a greater dynamic range of luminosity than is possible with standard digital imaging. Due to the limitations of printing and display contrast, acquiring an HDR image is often not sufficient; one must also develop methods of storing, processing and/or displaying the results. The method of rendering an HDR image such that it can be visualised in a standard printing device or monitor is called tone mapping. Specifically, tone mapping is a technique used in image processing and computer graphics to map a set of pixel values to another in order to approximate the appearance of HDR images in a medium which has a more limited dynamic range, while still preserving the details coming from the HDR image. Tone mapping is also often used on HDR images to facilitate further processing using conventional artificial vision algorithms.

Dealing with real-world complex situations, such as imaging under irregular illumination across different scene settings and with high-contrast within a scene, is a typical problem in artificial vision for outdoor applications. In the present description, the term illumination refers to radiance in radiometric terms or luminance in photometric terms (that is the radiance weighted by a human perceptual curve over the wavelengths), both of which correspond to the light power that is emitted/reflected/transmitted by a surface viewed from a particular solid angle. Moreover, when considering embedded applications, vision systems must be low-power (to last long enough without requiring huge batteries), have a small form factor (to be mobile), and operate in real-time (since it needs to operate with systems that fly, drive, walk or interact with humans). A trade-off needs to be made since all these requirements are often intertwined: real-time solutions typically require more computational capabilities leading to an increased power consumption and form factor.

There is thus a need for solutions to obtain combined HDR, tone-mapped media items, such as images or videos at low latencies and low power under a variety of illumination settings, allowing the visual data to be processed where it is collected.

### SUMMARY OF THE INVENTION

According to a first aspect of the invention, there is provided a method of obtaining a tone-mapped, high dynamic range media item as recited in claim 1.

Thus the present invention provides, in a single apparatus or system, a method for obtaining tone-mapped, HDR images. The present invention proposes a parallel high dynamic range imaging and tone mapping algorithm. The proposed algorithm when implemented in an imaging system including processing elements (a so-called vision chip) consumes only very little power and achieves low latency. The proposed system can be used to image scenes featuring a wide variation of illuminance (light levels) of up to 5-6 orders of magnitude, while being able to operate in different settings (indoors with low light conditions and outdoors). Furthermore, flicker-free tone-mapped videos can be obtained.

According to a second aspect of the invention, there is provided an imaging apparatus as recited in claim 15.

Other aspects of the invention are recited in the dependent claims attached hereto.

### BRIEF DESCRIPTION OF THE DRAWINGS

Other features and advantages of the invention will become apparent from the following description of a non-limiting exemplary embodiment, with reference to the appended drawings, in which:
- Figure 1 is a schematic illustration of an example vision chip system according to an embodiment of the present invention;
- Figure 2 is a diagram illustrating the principle of processing the transduced light while it is being integrated;
- Figure 3 is a flow chart illustrating an example method according to an embodiment of the present invention;
- Figure 4a is a diagram schematically illustrating a prior art HDR imaging method based on multiple exposure times;
- Figure 4b is a diagram schematically illustrating a prior art HDR ASIC imaging method; and
- Figure 4c is a diagram schematically illustrating the principle of the method illustrated in the flow chart of Figure 3.

### DETAILED DESCRIPTION OF AN EMBODIMENT OF THE INVENTION

An embodiment of the present invention will now be described in detail with reference to the attached figures. Identical or corresponding functional and structural elements which appear in different drawings are assigned the same reference numerals.

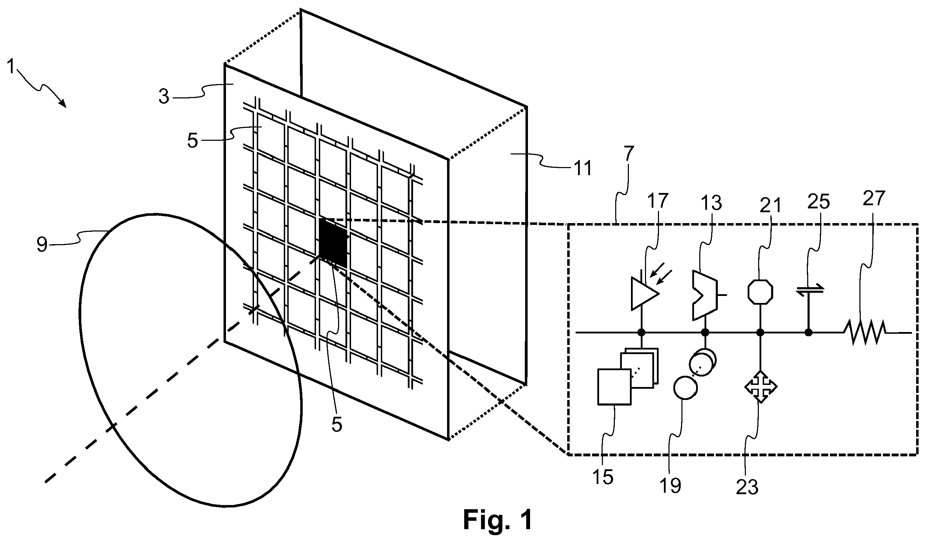

The present invention explains how traditional problems of HDR imaging and tone mapping can be addressed on a computing architecture integrating a vision sensor. Figure 1 shows a vision chip system 1 comprising the vision sensor 3. The vision sensor 3 comprises a grid of media elements 5, in this example pixels but they could alternatively be voxels. Depending on context, the terms "pixel" and "voxel" are used in this text to refer either to a light-receiving element of a two/three-dimensional imaging device, or (in the more usual sense) to an element of a 2D/3D image. In this example, a small processing element 7, referred to hereinafter as a processor, is part of each pixel 5. In other words, one processor 7 is placed next to a conventional pixel. However, in other variants, one processor could be shared by at least two pixels 5. In this case, there would not be a need to have one separate processor 7 for each pixel 5. In the present description, one processor 7 and one pixel 5 are together referred to as a cell. In the described embodiment, each cell is arranged to communicate with its neighbours thus allowing a local data transfer. The cells all together form the vision sensor 3, which in the described embodiment is a cellular processor array (CPA), which may be programmable, and also referred to as a vision chip. As seen in Figure 1, the CPA 3 is located behind (when seen from the direction or arrival of the light) a lens 9. The CPA 3 implements a concept of focal plane processing or near focal plane processing (the CPA is located substantially in the focal plane of the lens) where the visual data is treated or processed directly where it is collected, and therefore allows outputting only relevant pieces of information, hence considerably reducing bandwidth of external data communication and alleviating the processing burden in the core of a system. Since light can be captured and processed in situ by the array 3, these types of processors may be termed focal-plane processors. The operation of the CPA 3 is controlled by a controller unit 11, referred to hereinafter as an instruction processing unit (IPU), which in this example is not part of the CPA 3.

The CPA 3 comprises an array of cells, in this example 256 × 256 cells, each including an arithmetic logic unit (ALU) 13, which provides computing capabilities and is configured to perform analogue current-mode computations and can thus be implemented in a very compact fashion. The CPA 3 also comprises analogue registers 15, in this example seven analogue registers 15 per cell, which can be used to store analogue samples such as the quantity representing the amount of light integrated by a photo-sensitive element 17 (present in each pixel), in this example a photo-diode, or any other derived quantity computed by the ALU 13. The photodiode 17 is later also referred to as a register *R*ₚᵢₓ. In other words, *R*ₚᵢₓ is a photosensitive register. Along the analogue registers 15, the CPA 3 also comprises digital registers 19 of which at least some may be single bit registers. In this example, each cell comprises thirteen single-bit digital registers 19, which can be loaded externally or internally from a comparator (part of the ALU 13) bridging the analogue and digital domains. The digital registers 19 can load an activity flag 21, which controls the operation of the cell, i.e. the execution or not of instructions dispatched by the IPU 11. This enables the program or algorithm to perform branching in a single-instruction, multiple-data (SIMD) flow of instructions. The analogue and digital registers 15, 19 may comprise the only memory available on-chip.

In this example, each cell of the CPA 3 also comprises addressing circuitry 23 which is connected via an input/output (I/O) control unit 25, and which allows the interaction with the entire array or a subset of its cells. This enables a flexible read-out of entire frames, single pixels or other patterns. In this example, all the cells on the array are connected by a simple communication architecture that supports the sharing of information between direct neighbours. Specifically, data can be shared by a cell using a register which is only locally writable (i.e. writable by that specific cell only) but can be read by each of the 4 adjacent neighbours. As square-shaped pixels are used in this example, neighbouring pixels for a given pixel are defined as those pixels sharing share an edge with the given pixel. Of course other connectivities are also possible. Thus, the number of the neighbouring pixels could for example be 8 pixels instead of 4 pixels. In Figure 1 there is also shown a diffusion element 27 for carrying out some computations as explained later.

Even though the problems of HDR imaging and tone mapping are usually addressed separately, the present invention proposes a method that intrinsically combines them in an algorithm processing while light is being integrated, and running on a CPA vision-chip. The output of the proposed system is thus a tone-mapped image containing the HDR information of the scene. This is of great interest for real-world systems which are designed to work in diverse light conditions such as outdoors and to be able to perform diverse tasks, such as reconstruction, segmentation or recognition. It is desirable to image a scene under a wide range of light conditions and preserve details in very bright or dark regions. The proposed approach is unconventional, because it brings HDR imaging and tone mapping together in an algorithm which intrinsically computes tone-mapped HDR frames on the sensor's chip and outputs them. This can be done without the need of external post-processing, and while the sensor 3 is integrating light or more specifically photocurrent resulting from an exposure of the pixel 5 to light. Compared to more conventional approaches taking multiple photographs with multiple exposure times to obtain an HDR image frame, in the present invention each pixel chooses while receiving light an optimal exposure time. In other words, there is only a single spatially varying exposure, chosen pixelwise as light is being integrated. Thus, the proposed algorithm does not need any additional time to obtain the HDR, tone-mapped images apart from the time needed to integrate light. This is made possible because sensing and processing are collocated. The algorithm is designed so that it can be run in parallel (although it must not necessarily be) in each pixel and thus exploits the parallel nature of the CPA 3.

Thus, the present invention proposes a dedicated algorithm which exploits the simultaneous sensing and processing of the CPA 3. Because data can be processed on-chip as the light is being integrated, there is no need to communicate with a peripheral device. Hence, the goal is to propose a system which solely outputs HDR tone-mapped frames without the need of any post-processing, and which can do this in real-time. In this example, 8-bit grey-level frames can be read from the CPA 3 at an externally clocked rate, or once one loop of the algorithm (to generate an image frame) has terminated, as in a "best-effort" mode in which frames are generated as fast as possible depending on the processing time of that loop. In the following, the principle of the proposed HDR tone mapping algorithm running in this "best-effort" mode is explained more in detail.

In this example, the output of the CPA 3 is limited to 256 levels encoded in 8-bits. The internal (on-chip) computations have similarly a limited dynamic range. Therefore, in order to produce a tone-mapped HDR frame, the tone-mapped values are directly computed, rather than performing additional steps over an HDR frame, with higher per-pixel resolution. In practice, an image region receiving a lot of light should stop integrating photo-current earlier than an image region receiving little light. This can only be achieved by changing the acquisition of light on-chip since the aim here is to specify the integration time or how the integration is taken into account on a per-pixel basis depending on some criteria. In a conventional camera, all pixels of an image are exposed for the same amount of time. However, the present invention proposes an algorithm which allows the vision chip to use pixel-dependent integration times. Furthermore, in the present invention, the computations for determining the integration times are not performed a priori but while exposing, i.e. while integrating the photocurrent.

The example vision chip operates in SIMD mode, which means that the same instruction is dispatched to all the pixels' processors 7 to act on their own data stored in their respective local registers 15, 17, 19. As mentioned, the light-sensitive register (analogue register) is denoted by *R*ₚᵢₓ. In this example, every pixel 5 has exactly one *R*ₚᵢₓ. The value stored in this register gradually increases, at a rate proportional to the incident light intensity (i.e. it integrates the photocurrent). In addition, it is assumed that a subset of the processors can be masked by designating them as not active, i.e. that they should not perform the instructions that are dispatched by the IPU 11, when the activity flag 21 is set. This mechanism is a way to perform a branching condition dependent upon some logical conditions (as explained below) evaluated based on the value of a register.

The *R*ₚᵢₓ registers are allowed to integrate for a given time. This time is determined to be the time it would take to make every single pixel of the vision-chip 3 to be at their brightest level. During this integration, the value of *R*ₚᵢₓ is copied periodically, e.g. every *δt,* to another free register (in this example also pixel-specific, like *R*ₚᵢₓ), referred to as *R*_{frame}, when given conditions as explained below are met. The processor is masked (i.e. its operation is blocked apart from keeping and reading the data in *R*_{frame}) by using its activity flag 21 to prevent the execution of instructions when at least one of the conditions is not met (no copy will occur). After the given time determined by multiple periods of *δt,* the tone-mapped HDR frame is read from *R*_{frame}. In other words, the given time is defined to be *N · δt,* where *N* is a positive integer. It is to be noted that the integration may still continue even after the flag 21 has been set, because as light falls onto the pixels 5, the values in the *R*ₚᵢₓ registers may still increase. It may not be possible to prevent the light from falling onto these registers and from transducing photons into charges. However, by masking the pixels 5, it is possible to stop the pixels 5 from operating normally. In this way, even though light may still continue to fall on to the pixels 5, the value of a given *R*ₚᵢₓ is not considered any more for that given cell, i.e. the value stored in *R*ₚᵢₓ may be ignored once the flag 21 has been set.

The given conditions to copy from *R*ₚᵢₓ to *R*_{frame} comprise two parts in this example. First, the integration time which is taken into account should depend on the amount of light collected at a specific pixel itself, or more specifically in a first set of pixels of a first size, also referred to as a first neighbourhood set comprising a first number of contiguous pixels including the respective pixel itself, i.e. a first square set of pixels of size *S*₁ × *S*₁ pixels in this example. In this example the first size is one pixel. The amount of light collected in the first neighbourhood set can be expressed as a first weighted or smoothed average of the pixel value corresponding to the exposure of the first neighbourhood set. If it is smaller than a first threshold *θ*₁, the pixel may need more light and copies from *R*ₚᵢₓ may continue to be taken. If the condition fails, then the pixel's processor is masked: no copy occurs and *R*_{frame} keeps its value. In the present description the terms pixel value, integrated photocurrent value and the pixel exposure value are used interchangeably since the pixel value can be computed from its exposure value, which derives from the integrated photocurrent value. The irradiance corresponds to amount of power (per square meter) falling onto the pixel (the radiance integrated in the direction the pixel points at), whereas exposure is the irradiance multiplied by time. The photocurrent itself is the current generated at the pixel by the photosensitive element (the photodiode 17 which "converts" photons into charges) when it receives light (when it is exposed, looking at a radiant part of the scene). The photocurrent charges a capacitor and the "number of charges" it contains is proportional to its voltage, which, after being sampled by an analogue-to-digital converter to an 8 bit value (i.e. a number between 0 and 255), corresponds to the actual value of the pixel.

However, in this example, the first threshold alone does not determine whether a copy should be taken or not. A second part of the given conditions takes into account the light collected in a second set of pixels of a second size, where the second size is larger than the first size. The second set of pixels may also be referred to as a second neighbourhood set comprising a second number of contiguous pixels, i.e. a second square set of pixels of size *S*₂ × *S*₂ pixels in this example. In this example, the first and second neighbourhood sets overlap so that the first neighbourhood set is a subset of the second neighbourhood set, and the first number of pixels is smaller than the second number of pixels. Furthermore, the respective pixel itself (centre pixel) is part of the second neighbourhood set. These different neighbourhood sizes provide a measure at multiple scales of how much light is falling onto the pixel array. Smooth variation of the exposure times chosen by the pixels across the image plane is guaranteed by evaluating the exposure criteria in overlapping neighbourhoods for nearby pixels. A convolution of an *R*ₚᵢₓ array with Gaussian kernel (which can be more complicated than a simple Gaussian kernel, and could also be non-linear and thus more complicated than a convolution such as an anisotropic diffusion) K parameterised with its standard deviation (its size) is performed (*R*ₚᵢₓ * *K*(*S*₂)) to average the light intensity in the second neighbourhood set. This value can be expressed as a second weighted or smoothed average exposure value for the second neighbourhood set. Only if this value is also smaller than a second threshold *θ*₂, should copies continue to be taken from *R*ₚᵢₓ. It is to be noted that in this example, the first and second thresholds *θ*₁, *θ*₂ are the same for all the cells/pixels. Furthermore, in this example, the first and second neighbourhood sets are the same for all cells/pixels relative to the pixel position, but different in absolute terms. In other words, each pixel has its own first and second neighbourhood sets and possibly more, so that the shape and size of the first neighbourhood sets are the same for all the pixels while the shape and size of the second neighbourhood sets are also the same for all the pixels. In the present embodiment, the size of each of the neighbourhood sets is smaller than the entire array of pixels.

A pseudocode for this algorithm can be written as follows:
Require: *R*₁, *R*₂, *R*ₚᵢₓ, *R*_{frame}: four register arrays
Require: *N*, *θ*₁, *θ*₂, *S*₁, *S*₂: five hyper-parameters

| | | |
|---|---|---|
| 1 : | *R*ₚᵢₓ ← 0 | Reset the pixels |
| 2: | do | |
| 3: | *R*₁ ← *R*ₚᵢₓ * *K*(*S*₁) | Average first neighbourhood |
| 4: | *R*₂← *R*ₚᵢₓ ** K*(*S*₂) | Average second neighbourhood |
| 5: | if *R*₁ ≤ *θ*₁ and *R*₂ ≤ *θ*₂ then | |
| 6: | *R*_{frame} ← *R*ₚᵢₓ | |
| 7: | end if | |
| 8: | *t* ← *t* + δ*t* | |
| 9: | while *t < N* δt* | |
| 10: | trigger frame readout of *R*_{frame} | |

Intuitively *R*ₚᵢₓ * *K*(*S*₂) or *R*ₚᵢₓ * *K*(*S*₁) is a smoothed version of *R*_{*p*ix}. Theoretically *K*(*S*₂) is a convolution kernel of the second size (i.e. in this example a square matrix of size *S*₂ by *S*₂) with which the *R*ₚᵢₓ array is convolved. This convolution kernel may depend on the values of the entire neighbourhood set. Similarly, *K*(*S*₁) is a convolution kernel of the first size (i.e. in this example a square matrix of size *S*₁ by *S*₁) with which the *R*ₚᵢₓ array is convolved. In this example, constant matrices for *K*(*S*₁) and *K*(*S*₂) are used. Of course the first and second neighbourhood sets do not have to be of a square shape; they could be substantially circular for example. In practice, the convolutions may be implemented by a resistive (diffusion) network between the processing elements as it is the case in the present embodiment. The *R*ₚᵢₓ array was convolved above with a Gaussian kernel. However, The *R*ₚᵢₓ array could be convolved with kernels more complicated than an isotropic Gaussian. Also this parameter could be non-linear (and thus the operation could be more complicated than a convolution, such as in anisotropic diffusion).

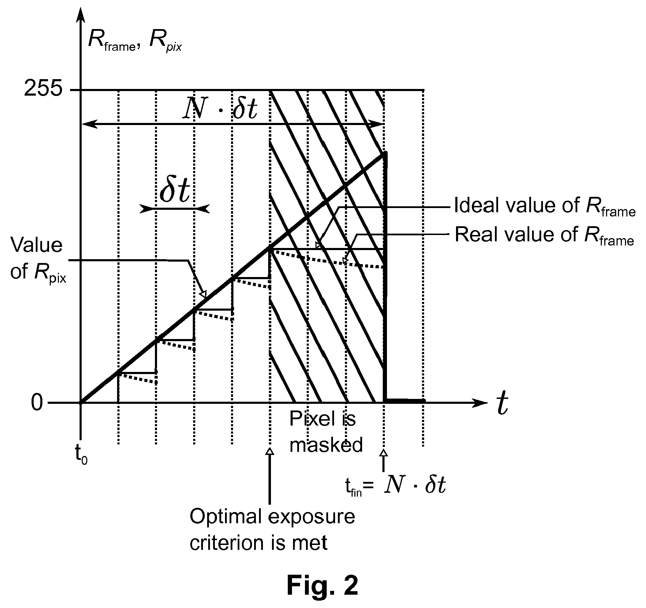

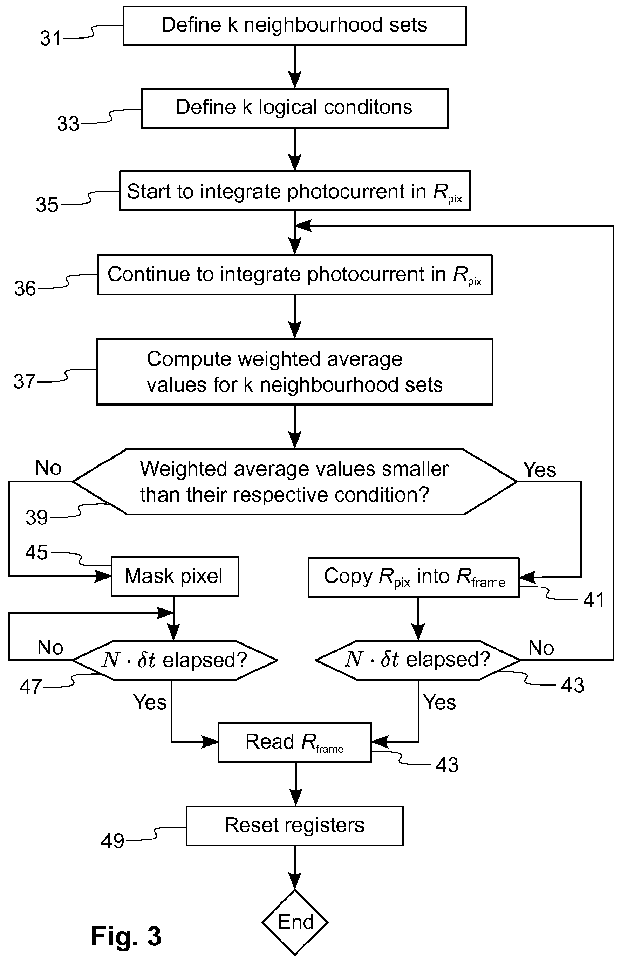

The proposed method can be summarised by the diagram of Figure 2 and the flow chart of Figure 3. The process of the flow chart of Figure 3 is in this example carried out for every pixel 5 in the pixel array. In step 31, k neighbourhood sets are defined by the user, in this example the first neighbourhood set and the second neighbourhood set. In step 33, k logical conditions are defined, i.e. one condition for each neighbourhood set. In this example, the first threshold *θ*₁ for the first neighbourhood set and the second threshold *θ*₂ for the second neighbourhood set are defined by the user. In step 35, the cells, and more specifically the pixels 5, start sensing light incident on the pixels transduced in a photocurrent value. Also because the photocurrent value is being integrated, this continuously changes the value of *R*ₚᵢₓ during the computation loop. In step 36, the integration continues throughout the procedure of obtaining an image frame. The integrated photocurrent value as it evolves is continuously saved in *R*ₚᵢₓ. In this example, this value increases linearly as shown in Figure 2. The value of *R*ₚᵢₓ at any point in time depends on the amount of light the photo-sensitive element has received. The integrated photocurrent value can be used to directly derive the exposure value of the respective pixel. In step 37, a value corresponding to a weighted average exposure is computed or more broadly a comparison or conditioning value is obtained for each neighbourhood set, i.e. in this example the first weighted average exposure value for the first neighbourhood set and the second weighted average exposure value for the second neighbourhood set are computed.

In step 39, each one of the weighted average exposure values is compared to its respective threshold value, i.e. in this example, every *δt,* the two values are compared to *θ*₁ and *θ*₂ to determine whether or not a particular pixel 5 should be masked. As long as all the weighted average exposure values are below their respective threshold, in step 41 the value in *R*ₚᵢₓ is periodically, i.e. every *δt,* copied into *R*_{frame} as shown in Figure 2. As also shown in Figure 2, the values in *R*_{frame} may slightly decay over time compared to the ideal case. However, it might be possible to predict this decay, and compensate for it if necessary. In step 43 it is determined whether or not a time period corresponding to *N* · *δt* has elapsed. If the period has not yet elapsed, then the process continues in step 37 after a time period corresponding to *δt* has elapsed. However, if in step 43 *N · δt* has elapsed, then the value in *R*_{frame} is read (substantially at the same time for all the pixels 5 in the array) to obtain the tone-mapped HDR image frame. If in step 39 it was determined that at least one of the weighted average exposure values is not below its respective threshold, then the process continues in step 45 where the pixel 5 is masked by setting the activity flag 21, i.e. no further copies are taken from *R*ₚᵢₓ for this particular pixel 5. In step 47 it is determined whether or not *N · δt* has elapsed. If it has not yet elapsed, then this step is repeated every *δt.* However, if *N · δt* has elapsed, then in step 43 the value in *R*_{frame} is read to obtain the tone-mapped HDR image frame. In step 49, at least some of the registers, including *R*ₚᵢₓ and *R*_{frame} are reset before the process of obtaining a new frame is started, i.e. before the process of the flow chart of Figure 3 is repeated.

In the proposed algorithm, the maximal pixel intensity is near *θ*₁ since no further copying happens once the threshold is reached. A similar argument holds for the local average intensity that will be near *θ*₂. The neighbourhood size *S* permits an "interpolation" between two extreme images: if *S* is the image size then a single exposure for all the pixels is chosen and produces a non-HDR image, if *S* = 0 then all the pixels will be near *θ*₁. As a consequence, the algorithm produces HDR images, since the integration time ranges from the order of *N · δt* = 2µs to more than *N · δt* = 2s (above this time, frames tend to get noisy when implemented by analogue hardware as in the explained embodiment). Thanks to the use of the two thresholds above to determine whether integration should continue or not, these images are also locally well-exposed, i.e. they are tone-mapped using a local operator.

It is to be noted that the maximum integration time is bounded by *N* * *δt,* and that *δt* is not a free parameter but is determined by the time it takes for the algorithm to perform the instructions of steps 3 to 9. In other words, *δt* is the time that the algorithm takes to perform all the operations needed to verify the criteria to determine whether or not a pixel should stop integrating, i.e. *δt* is the time required to compute the neighbourhood averages *R*ₚᵢₓ * *K*(*S*₁) and *R*ₚᵢₓ * *K*(*S*₂) and to compare them with the thresholds *θ*₁ and *θ*₂. It is preferable to keep the sampling time interval *δt* as short as possible. However, it is constrained by the processing time taken by the inner loop (instructions of steps 3 to 9). If it is too long, the light sampling is not performed often enough and the picture displays unsightly discontinuities, i.e. a banding effect appears instead of smooth transitions between pixels in the image. Therefore, the aim is to make the inner-loop processing time as fast as possible. For instance, the diffusion element 27 may be implemented as a built-in resistive network on-chip and used to approximate the two Gaussian convolutions. When configured properly, the resistive network performs such a convolution in a single "clock-cycle". The parameter *N* can be chosen by the user depending on the lighting conditions. In dark conditions *N* may be chosen high to allow the pixels to integrate longer if needed. In very bright conditions *N* may be very short and will lead to a very high number of frames per second. In a completely automatic system, *N* could be chosen very easily so that images are not too dark: for instance, at the beginning, *N* can be set to a low value, and then an average value of all the pixels in the array is computed. If this average is lower than a threshold, *N* is increased. In this manner *N* can be iterated until the average has reached the threshold.

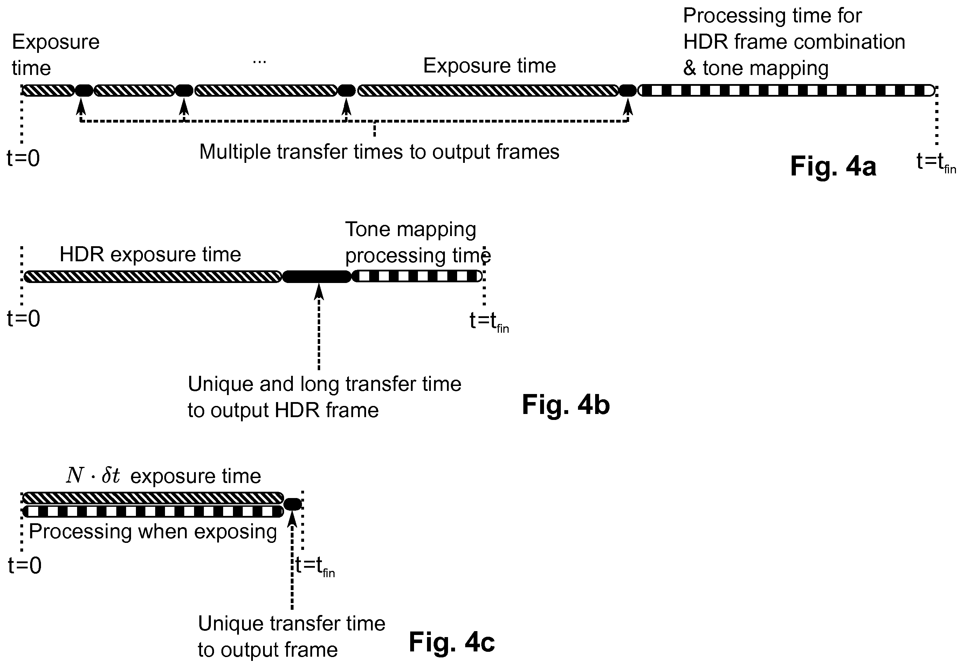

An algorithm has been outlined above for obtaining HDR and tone-mapped image frames. The difference between the present algorithm and some prior art algorithms can be clearly seen from Figures 4a to 4c. Figure 4a schematically illustrates a prior art HDR imaging method based on multiple exposure times, while Figure 4b schematically illustrates a prior art HDR ASIC imaging method. The algorithm of the present invention is schematically illustrated in Figure 4c. The HDR aspect comes from the pixel-wise variable exposure times, which in the explained example vary from 2µs to 2s. This makes it possible to vary the pixel exposure times from unusually short exposure times to unusually long exposure times depending on the irradiance of the pixels in the different regions in the images. The tone mapping aspect comes from the formulation of the criteria in the low dynamic range 8-bit space. In fact, because the integration time may potentially be different for each pixel, the 8-bit value of a pixel does not correspond to the same "exposure" across the array. For instance, concerning all the pixels which have the value 128 in the final image, it would be possible to notice that they were not undergoing the same irradiance across the array and therefore stopped integrating at different times. This means that the significance of the value 128 is different across different regions in the image. 128 in bright regions does not correspond to the same amount of light that fell onto the pixel as in dark regions. This kind of mapping of the values that the pixels take depending on the irradiance they undergo in different parts of the image is called tone mapping, and may be referred to as a tone reproduction operator.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims. In the embodiment above, the pixels were exposed to light but other bands of electromagnetic radiation, such as infrared (IR) or ultraviolet (UV) radiation, could equally be used with appropriate sensing elements. For example, for IR (and to a lesser extent for UV), CMOS photodiodes are also sensitive. An IR sensor can be obtained if IR-coated lenses are not used (anti-IR chemical deposited on the lens glass surface).

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of obtaining a tone-mapped high dynamic range media item in an imaging apparatus (1) comprising a vision sensor (3) comprising an array of cells, each cell comprising a processing element (7) and a media element (5) configured to communicate with the processing element (7), the processing elements (7) being configured to access a first register (*R*ₚᵢₓ) and a second register (*R*_{frame}), the method comprising, for each of the cells in the array of cells:
• defining (31) a first neighbourhood set comprising a first number of media elements (3) including a media element (3) of a respective cell, and a second neighbourhood set comprising a second number of media elements (3) including the media element (3) of the respective cell, the second number of media elements (3) being different from the first number of media elements (3);
• setting (33) a first logical condition (*θ*₁) for the first neighbourhood set and a second logical condition (*θ*₂) for the second neighbourhood set;
• integrating (35, 36) a photocurrent value resulting from an exposure of the media element (5) to light, and storing a resulting evolving integrated photocurrent value in the first register (*R*ₚᵢₓ) of the respective cell;
• determining (37) a first conditioning value for the first neighbourhood set and a second conditioning value for the second neighbourhood set;
• as long as the first conditioning value fulfils the first logical condition and the second conditioning value fulfils the second logical condition, copying (41) the value from the first register (*R*ₚᵢₓ) into the second register (*R*_{frame}) at given time instants; and
• reading (43) the value from the second register (*R*_{frame}) to thereby obtain the tone-mapped high dynamic range media item.

2. A method according to claim 1, wherein each of the media elements (3) in the array of cells is a pixel or voxel and comprises a photo-sensitive element (*R*ₚᵢₓ).

3. A method according to claim 1 or 2, wherein the given time instants form a periodic sequence of time instants.

4. A method according to any one of the preceding claims, wherein the given time instants are separated by a value between 0.5µs and 10µs or more preferably by a value between 1 µs and 5µs.

5. A method according to any one of the preceding claims, wherein the size of the first neighbourhood set is one media element (3), and the size of the second neighbourhood set is a value between five and nine media elements (3).

6. A method according to any one of the preceding claims, wherein the method comprises masking (47) the media element (3) of the respective cell as soon as the first conditioning value fulfils the first logical condition (*θ*₁) or the second conditioning value fulfils the second logical condition (*θ*₂).

7. A method according to any one of the preceding claims, wherein the first neighbourhood set is a sub-set of the second neighbourhood set, and wherein the second neighbourhood set is a sub-set of the array of media elements of the array of cells.

8. A method according to any one of the preceding claims, wherein for at least some cells in the array of cells different integrated photocurrent values from each other are read from the second register (*R*_{frame}).

9. A method according to any one of the preceding claims, wherein the method comprises reading (43) the values from all the second registers (*R*_{frame}) of the array of cells substantially at the same time.

10. A method according to any one of the preceding claims, wherein copying the value from the first register (*R*ₚᵢₓ) into the second register (*R*_{frame}) overwrites a current value in the second register (*R*_{frame}).

11. A method according to any one of the preceding claims, wherein the method comprises resetting (49) the first and second registers (*R*ₚᵢₓ, *R*_{frame}) once the value from the second register (*R*_{frame}) has been read.

12. A method according to any one of the preceding claims, wherein each cell in the array of cells has the same number of media elements (3) in the first neighbourhood set on one hand, and the same number of media elements (3) in the second neighbourhood on the other hand.

13. A method according to any one of the preceding claims, wherein the first conditioning value is a first weighted average exposure value of the first neighbourhood set, and the second conditioning value is a second weighted average exposure value of the second neighbourhood set.

14. A method according to claim 13, wherein the first and second weighted average exposure values for a respective first or second neighbourhood set are obtained by convolving an array of first register values of the respective neighbourhood set with a convolution kernel.

15. An imaging apparatus (1) for obtaining a tone-mapped, high dynamic range media item, the apparatus comprising a vision sensor (3) comprising an array of cells, each cell comprising a processing element (7) and a media element (5) configured to communicate with the processing element (7), the processing elements (7) being configured to access a first register (*R*ₚᵢₓ) and a second register (*R*_{frame}), the apparatus further comprising, for each of the cells in the array of cells, means for:
• defining a first neighbourhood set comprising a first number of media elements (3) including a media element (3) of a respective cell, and a second neighbourhood set comprising a second number of media elements (3) including the media element (3) of the respective cell, the second number of media elements (3) being different from the first number of media elements (3);
• setting a first logical condition (*θ*₁) for the first neighbourhood set and a second logical condition (*θ*₂) for the second neighbourhood set;
• integrating a photocurrent value resulting from an exposure of the media element (5) to light, and storing a resulting evolving integrated photocurrent value in the first register (*R*ₚᵢₓ) of the respective cell;
• determining a first conditioning value for the first neighbourhood set and a second conditioning value for the second neighbourhood set;
• as long as the first conditioning value fulfils the first threshold and the second conditioning value fulfils the second threshold, copying the value from the first register (*R*ₚᵢₓ) into the second register (*R*_{frame}) at given time instants; and
• reading the value from the second register (*R*_{frame}) to thereby obtain the tone mapped, high dynamic range media item.
